# EUROPÄISCHE PATENTSCHRIFT

(11) **EP 2 849 978 B1**
(45) Veröffentlichungstag und Bekanntmachung des Hinweises auf die Patenterteilung: **24.02.2016**
(21) Anmeldenummer: 13709462.9
(22) Anmeldetag: 18.03.2013
(51) Int. Cl.: B60W 30/18, B60W 50/14

(54) **VERFAHREN ZUR WARNUNG EINES FAHRERS EINES EINSPURIGEN KRAFTFAHRZEUGS VOR EINEM VERLASSEN DER FAHRSPUR**
METHOD FOR ALERTING THE RIDER OF A SINGLE-TRACK MOTOR VEHICLE THAT HE/SHE IS LEAVING THE LANE
PROCÉDÉ D'AVERTISSEMENT D'UN CONDUCTEUR DE DEUX-ROUES LORSQU'IL SORT DE SA VOIE DE CIRCULATION

(30) Priorität: 14.05.2012 DE 102012207981
(43) Veröffentlichungstag der Anmeldung: 25.03.2015
(73) Patentinhaber: Robert Bosch GmbH, 70442 Stuttgart (DE)
(72) Erfinder: WAHL, Anja, 71706 Markgroeningen (DE); SCHAAF, Gunther, 70806 Kornwestheim (DE)
(86) Internationale Anmeldenummer: PCT/EP2013/055509
(87) Internationale Veröffentlichungsnummer: WO 2013/170979

(56) Entgegenhaltungen:
- DE-A1- 3 839 520
- DE-A1-102009 054 756

## Beschreibung

### Stand der Technik

Beim Durchfahren einer Kurve mit einem Zweiradfahrzeug nimmt dieses abhängig vom Kurvenradius und der Fahrgeschwindigkeit einen mehr oder weniger großen Schräglagenwinkel an. Mit Hilfe heutiger Inertialsensorik ist es möglich, diesen Schräglagenwinkel zu bestimmen. Motorräder mit solchen Sensoren und den zugehörigen Algorithmen zur Schräglagenabschätzung sind aus dem Stand der Technik bekannt.

Aus der DE 20 2009 009 000 U1 ist weiter eine Anlage zur Erfassung und Warnung von in falscher Richtung fahrenden Fahrzeugen bekannt. Diese umfasst mindestens einen Magnetfeldsensor, der bei der Detektion eines auf einer Fahrbahn in falscher Richtung fahrenden Fahrzeugs ein Signal erzeugt und eine Falschfahrerwarnvorrichtung zum Ausgeben einer Warnung an einen in falscher Richtung fahrenden Fahrer des Fahrzeugs. Dabei ist der mindestens eine Magnetfeldsensor mit einem Abstand in Falschfahrrichtung vor und/oder hinter der Falschfahrerwarnvorrichtung in einem Bohrloch in der Fahrbahn versenkt.

Zum technischen Umfeld wird weiter auf die DE 10 2009 054 756 A verwieren.

### Offenbarung der Erfindung

Die Erfindung betrifft ein Verfahren zur Warnung eines Fahrers eines einspurigen Kraftfahrzeugs vor einem Verlassen der Fahrspur, bei dem
- mittels einer Videosensorik wenigstens eine Fahrspurbegrenzung ermittelt wird,
- der laterale Abstand eines Bezugspunktes am Kraftfahrzeug von der Fahrspurbegrenzung ermittelt wird,
- eine die Schräglage des Kraftfahrzeugs beschreibende Schräglageninformation des Kraftfahrzeugs ermittelt wird und
- anhand wenigstens des lateralen Abstandes sowie der Schräglageninformation ermittelt wird, ob ein Teil des Kraftfahrzeugs oder des Aufsassen über die Fahrspurbegrenzung hinausragt. Damit kann ein Hineinragen des Fahrers beispielsweise eines Motorrads in die Gegenfahrbahn erkannt werden und damit bei Gegenverkehr eine Kollision vermieden werden.

Eine vorteilhafte Ausgestaltung der Erfindung ist dadurch gekennzeichnet, dass ein Schätzwert für den senkrechten Abstand zwischen der Helmobergrenze und dem Bezugspunkt am Kraftfahrzeug vorgegeben wird, wobei anhand wenigstens des lateralen Abstandes, der Schräglageninformation sowie des Schätzwertes ermittelt wird, ob ein Teil des Aufsassen über die Fahrspurbegrenzung hinausragt.

Eine vorteilhafte Ausgestaltung der Erfindung ist dadurch gekennzeichnet, dass es sich bei dem Bezugspunkt um die Position einer am Kraftfahrzeug angebrachten Videokamera bzw. einen Positionspunkt an oder innerhalb der Videokamera handelt.

Eine vorteilhafte Ausgestaltung der Erfindung ist dadurch gekennzeichnet, dass es sich bei der Fahrspurbegrenzung um die Grenze zu einer angrenzenden Fahrspur handelt.

Eine vorteilhafte Ausgestaltung der Erfindung ist dadurch gekennzeichnet, dass die Fahrbahnbreite ermittelt wird und dass als Grenze bzw. Grenzlinie zur angrenzenden Fahrspur die Fahrbahnmitte angenommen wird. Diese Ausgestaltung kommt insbesondere dann zum Tragen, wenn die Fahrbahnmitte nicht markiert ist.

Eine vorteilhafte Ausgestaltung der Erfindung ist dadurch gekennzeichnet, dass für den Fall, dass ein Teil des Kraftfahrzeugs oder des Aufsassen bzw. des Fahrers als über die Fahrspurbegrenzung hinausragend ermittelt wird, eine Warnung an den Fahrer bzw. Aufsassen erfolgt. Dadurch bekommt der Fahrer die Gelegenheit, beispielsweise durch eine Lenkbewegung ganz auf die eigene Fahrspur zurückzukehren.

Eine vorteilhafte Ausgestaltung der Erfindung ist dadurch gekennzeichnet,
- dass es sich bei der Fahrspurbegrenzung um die Grenze zu einer angrenzenden Fahrspur handelt,
- dass mittels der Videosensorik ermittelt wird, ob sich auf der angrenzenden Fahrspur Gegenverkehr oder andere Verkehrsteilnehmer befinden und
- nur für den Fall ermittelten Gegenverkehrs oder anderer Verkehrsteilnehmer eine Warnung an den Fahrer bzw. Aufsassen erfolgt. Dies bedeutet, dass nur in kritischen Situationen eine Fahrerwarnung erfolgt.

Weiter umfasst die Erfindung eine Vorrichtung, insbesondere ein Steuergerät, welche Mittel enthält, die zur Durchführung der vorstehend beschriebenen Verfahren ausgestaltet sind. Das bedeutet, dass der Programmcode für die Durchführung der Verfahren in diesem Steuergerät bzw. dieser Vorrichtung hinterlegt ist.

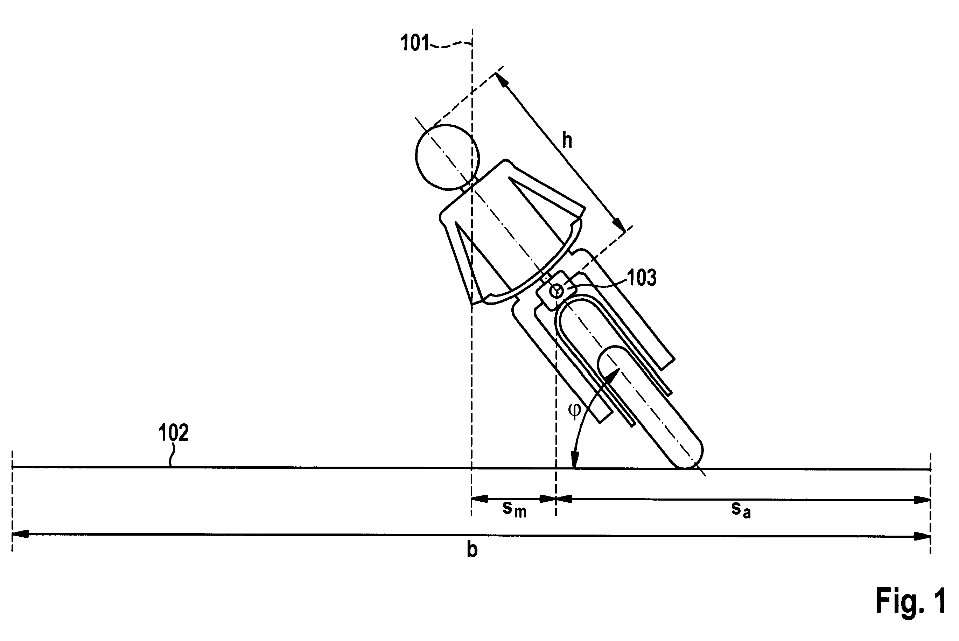

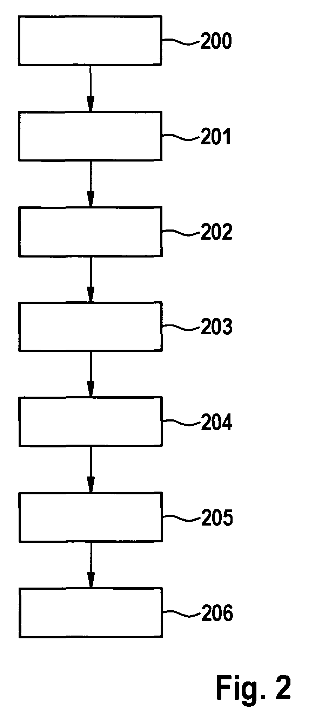

Die Zeichnung besteht aus den Figuren 1 und 2.
Fig. 1 zeigt einen Querschnitt durch eine Fahrbahn und ein darauf befindliches einspuriges Kraftfahrzeug mitsamt Fahrer bzw. Aufsassen.
Fig. 2 zeigt den grundlegenden Ablauf einer Ausführungsform des erfindungsgemäßen Verfahrens.

Selbst wenn ein Zweiradfahrer eine Kurve innerhalb der eigenen Fahrspur schneidet, d.h. die Räder des Zweirads befinden sich noch in der eigenen Fahrspur, besteht die Gefahr, dass aufgrund der Schräglage des Zweirads der Oberkörper des Fahrers in die angrenzende Fahrspur hineinragt. Dies ist insbesondere bei Linkskurven, wo mit Gegenverkehr gerechnet werden muss, gefährlich. Alternativ oder ergänzend zu bestehenden Warnsystemen, die beim Befahren der angrenzenden bzw. falschen Fahrspur warnen, ist es Aufgabe der Erfindung, den Zweiradfahrer zu warnen, falls dieser aufgrund der Schräglage in die angrenzende Fahrspur ragt. Abhängig davon, ob über das Videosystem Gegenverkehr erkannt wird, kann die Dringlichkeit der Warnung erhöht werden. Voraussetzungen für die Erfindung sind:
- ein am Zweirad verbautes bzw. befestigtes Videosystem zur Bestimmung von Fahrspurmarkierungen und/oder zur Ermittlung der Fahrbahnbreite anhand von Asphaltbegrenzungen
- die Möglichkeit zum Ermitteln einer Schräglageninformation bzw. Schräglagenschätzung mittels einer vorhandenen Inertialsensorik bzw. über das Videosystem

Ist eine Markierung der Fahrbahnmitte vorhanden, dann ist über die Fahrspurerkennung des Videosystems direkt der seitliche Abstand sₘ der Videokamera von der Fahrbahnmitte bekannt.

Liegen nur äußere bzw. keine Fahrspurmarkierungen vor, lässt sich der seitliche Abstand sₘ zur Fahrbahnmitte mittels der über das Videosystem erkannten Fahrbahnbreite b (Abstand der äußeren Fahrspurmarkierungen bzw. Abstand der Asphaltbegrenzungen) und der Position der Videokamera innerhalb der Fahrbahn sₐ bestimmen: sₘ = b/2 - sₐ. Mit der vorliegenden Schräglageninformation ϕ und dem Abstand h der Videokamera von der Helmobergrenze kann über die Bedingung sin(ϕ) · h >= sₘ das Verlassen der Fahrspur geprüft und eine entsprechende Warnung ausgegeben werden. sin(ϕ) · h - sₘ ist dabei diejenige Länge, um die der Aufsasse über die Fahrspurgrenze hinausragt.

Bei der Größe h kann es sich um einen fest vorgegebenen einheitlichen Schätzwert handeln, welcher bei einem Fahrer mit durchschnittlicher Körpergröße, welcher in durchschnittlicher bzw. üblicher Sitzposition auf dem Kraftfahrzeug sitzt, auftritt. Es ist aber auch eine Ermittlung der Größe h durch Sensormittel denkbar. In diesem Fall variiert der Wert von h zum Beispiel abhängig von der Körpergröße und Sitzhaltung des Fahrers.

Die verwendeten mathematischen Größen sind in Fig. 1 dargestellt:
ϕ kennzeichnet den Winkel zwischen der Fahrbahn und der Hochachse des Kraftfahrzeugs, b kennzeichnet die gesamte Fahrbahnbreite, die gestrichelte Linie 101 schneidet die Fahrbahn 102 in der Fahrbahnmitte. sₐ kennzeichnet den lateralen Abstand der Videokamera 103 vom Fahrbahnrand, sₘ kennzeichnet den lateralen Abstand der Videokamera von der Fahrbahnmitte.

Der grundlegende Ablauf einer Ausführungsform des erfindungsgemäßen Verfahrens ist in Fig. 2 dargestellt. Nach dem Start des Verfahrens in Block 200 wird in Block 201 mittels einer Videosensorik eine Fahrspurbegrenzung ermittelt. Anschließend wird in Block 202 der laterale Abstand eines Bezugspunktes am Kraftfahrzeug von der Fahrspurbegrenzung ermittelt. Beim Bezugspunkt kann es sich insbesondere um die Videokamera selbst bzw. einen Punkt der Videokamera halten. In Block 203 wird ein die seitliche Neigung bzw. Schräglage des Kraftfahrzeugs beschreibender Winkel ermittelt und anschließend wird in Block 204 anhand der in den Blöcken 202 und 203 ermittelten Größen ermittelt, ob ein Teil des Kraftfahrzeugs oder des Aufsassen bzw. Fahrers über die Fahrspurbegrenzung hinausragt. Im Falle eines Herausragens über die Fahrspurbegrenzung wird in Block 205 eine Warnung an den Fahrer bzw. Aufsassen gegeben. In Block 206 endet das erfindungsgemäße Verfahren.

## Patentansprüche

1. Verfahren zur Warnung eines Fahrers eines einspurigen Kraftfahrzeugs vor einem Verlassen der Fahrspur, bei dem
- mittels einer Videosensorik (103) wenigstens eine Fahrspurbegrenzung ermittelt wird (201),
- der laterale Abstand (sₘ) eines Bezugspunktes am Kraftfahrzeug von der Fahrspurbegrenzung ermittelt wird (202),
- eine die Schräglage des Kraftfahrzeugs beschreibende Schräglageninformation (ϕ) ermittelt wird (203) und
- anhand wenigstens des lateralen Abstandes (sₘ) sowie der Schräglageninformation (ϕ) ermittelt wird, ob ein Teil des Kraftfahrzeugs oder des Aufsassen über die Fahrspurbegrenzung hinausragt (204).

2. Verfahren nach Anspruch 1, **dadurch gekennzeichnet, dass** ein Schätzwert (h) für den senkrechten Abstand zwischen der Helmobergrenze und dem Bezugspunkt am Kraftfahrzeug vorgegeben wird, wobei anhand wenigstens des lateralen Abstandes (sm), der Schräglageninformation (ϕ) sowie des Schätzwertes (h) ermittelt wird, ob ein Teil des Aufsassen über die Fahrspurbegrenzung hinausragt (204).

3. Verfahren nach Anspruch 1, **dadurch gekennzeichnet, dass** es sich bei dem Bezugspunkt um die Position einer Videokamera (103) handelt.

4. Verfahren nach Anspruch 1, **dadurch gekennzeichnet, dass** es sich bei der Fahrspurbegrenzung um die Grenze zu einer angrenzenden Fahrspur handelt.

5. Verfahren nach Anspruch 4, **dadurch gekennzeichnet, dass** die Fahrbahnbreite (b) ermittelt wird und dass die Grenze zur angrenzenden Fahrspur als Fahrbahnmitte angenommen wird.

6. Verfahren nach Anspruch 1, **dadurch gekennzeichnet, dass** für den Fall, dass ein Teil des Kraftfahrzeugs oder des Aufsassen als über die Fahrspurbegrenzung hinausragend ermittelt wird, eine Warnung an den Aufsassen erfolgt (205).

7. Verfahren nach Anspruch 6, **dadurch gekennzeichnet,**
- **dass** es sich bei der Fahrspurbegrenzung um die Grenze zu einer angrenzenden Fahrspur handelt,
- **dass** mittels der Videosensorik (103) ermittelt wird, ob sich auf der angrenzenden Fahrspur Gegenverkehr oder andere Verkehrsteilnehmer befinden und
- nur für den Fall ermittelten Gegenverkehrs oder anderer Verkehrsteilnehmer eine Warnung an den Aufsassen erfolgt (205).

8. Verfahren nach Anspruch 1, **dadurch gekennzeichnet, dass** es sich bei der Schräglageninformation (ϕ) um den Winkel zwischen der Fahrspuroberfläche (102) senkrecht zur Fahrtrichtung und der Hochachse des Kraftfahrzeugs handelt.

9. Vorrichtung, enthaltend Mittel, die zur Durchführung der vorstehend beschriebenen Verfahren ausgestaltet sind.

## Claims

1. Method for alerting a driver of a single-track motor vehicle that he/she is leaving the lane, in which method
- at least one lane boundary is determined (201) by means of a video sensor system (103),
- the lateral distance (sₘ) of a reference point on the motor vehicle from the lane boundary is determined (202),
- inclined position information (ϕ) which describes the inclined position of the motor vehicle is determined (203), and
- on the basis of at least the lateral distance (sₘ) and the inclined position information (ϕ) it is determined whether of the motor vehicle or of the rider projects (204) beyond the lane boundary.

2. Method according to Claim 1, **characterized in that** an estimated value (h) is predefined for the vertical distance between the upper limit of the helmet and the reference point on the motor vehicle, wherein on the basis of at least the lateral distance (sm), the inclined position information (ϕ) and the estimated value (h) it is determined whether part of the rider projects (204) beyond the lane boundary.

3. Method according to Claim 1, **characterized in that** the reference point is the position of a video camera (103).

4. Method according to Claim 1, **characterized in that** the lane boundary is the boundary with an adjoining lane.

5. Method according to Claim 4, **characterized in that** the carriageway width (b) is determined, and **in that** the boundary with the adjoining lane is assumed to be the centre of the carriageway.

6. Method according to Claim 1, **characterized in that** in the event of part of the motor vehicle or of the rider being determined as projecting beyond the lane boundary, a warning is issued (205) to the rider.

7. Method according to Claim 6, **characterized**
- **in that** the lane boundary is the boundary with an adjoining lane,
- **in that** by means of the video sensor system (103) it is determined whether oncoming traffic or other road users are located on the adjoining lane, and
- a warning is issued (205) to the rider only in the event of oncoming traffic or other road users being detected.

8. Method according to Claim 1, **characterized in that** the inclined position information (ϕ) is the angle between the surface (102) of the lane perpendicular to the direction of travel and the vertical axis of the motor vehicle.

9. Device, containing means, which are configured to carry out the methods described above.

## Revendications

1. Procédé destiné à avertir un conducteur de deux-roues avant de quitter la file de circulation, dans lequel
- au moins une limite de file de circulation est déterminée (201) au moyen de capteurs vidéo (103),
- l'espacement latéral (sₘ) d'un point de référence sur le véhicule à moteur est déterminé (202) par la limite de file de circulation,
- une information de position inclinée (ϕ) décrivant la position inclinée du véhicule à moteur est déterminée (203), et
- il est déterminé, sur la base d'au moins l'espacement latéral (sₘ) ainsi que de l'information de position inclinée (ϕ), si une partie du véhicule à moteur ou des personnes assises dépasse de la limite de file de circulation (204).

2. Procédé selon la revendication 1, **caractérisé en ce qu'**une valeur estimée (h) de l'espacement vertical entre la limite supérieure d'un casque et le point de référence sur le véhicule à moteur est prédéterminée, dans lequel il est déterminé, sur la base d'au moins l'espacement latéral (sₘ), de l'information de position inclinée (ϕ) ainsi que de la valeur estimée (h), si une partie des personnes assises dépasse de la limite de file de circulation (204).

3. Procédé selon la revendication 1, **caractérisé en ce que** le point de référence est la position d'une caméra vidéo (103).

4. Procédé selon la revendication 1, **caractérisé en ce que** la limite de file de circulation est la limite d'une file de circulation adjacente.

5. Procédé selon la revendication 4, **caractérisé en ce que** la largeur de la voie de circulation (b) est déterminée et **en ce que** la limite de la file de circulation adjacente est prise comme étant le milieu de la voie de circulation.

6. Procédé selon la revendication 1, **caractérisé en ce que**, dans le cas où une partie du véhicule à moteur ou de la selle est déterminée comme dépassant de la limite de file de circulation, une alarme est fournie (205) aux personnes assises.

7. Procédé selon la revendication 6, **caractérisé**
- **en ce que** la limite de file de circulation est une limite d'une file de circulation adjacente,
- **en ce qu'**il est déterminé, au moyen des capteurs vidéo (103), si un trafic en sens inverse ou d'autres usagers de, la route sont présents sur la file de circulation adjacente, et
- **en ce qu'**une alarme n'est fournie aux personnes assises (205) que dans le cas où il est déterminé qu'un trafic en sens inverse ou que d'autres usagers de la route sont présents.

8. Procédé selon la revendication 1, **caractérisé en ce que** l'information de position inclinée (ϕ) est un angle entre la surface supérieure de la file de circulation (102) perpendiculairement à la direction de circulation et l'axe supérieur du véhicule à moteur.

9. Dispositif comprenant des moyens destinés à mettre en oeuvre le procédé décrit ci-dessus.
